# EUROPEAN PATENT SPECIFICATION

(11) **EP 2 684 586 B1**
(45) Date of publication and mention of the grant of the patent: **18.05.2016**
(21) Application number: 12754559.8
(22) Date of filing: 11.01.2012
(51) Int. Cl.: B01D 19/02, B65B 3/22, B67C 3/22

(54) **DEFOAMING DEVICE**
ENTSCHÄUMUNGSVORRICHTUNG
DISPOSITIF ANTI-MOUSSE

(30) Priority: 08.03.2011 JP 2011050068
(43) Date of publication of application: 15.01.2014
(73) Proprietor: Toyo Seikan Group Holdings, Ltd., Shinagawa-ku, Tokyo 1418627 (JP)
(72) Inventor: TATSUMI Yoshitaka, Yokohama-shi Kanagawa 230-0001 (JP); KIMURA Yoshihiko, Yokohama-shi Kanagawa 230-0001 (JP); NAKANE Yuuya, Yokohama-shi Kanagawa 230-0001 (JP); MORITA Yoshiyuki, Yokohama-shi Kanagawa 230-0001 (JP)
(74) Representative: von Kreisler Selting Werner - Partnerschaft von Patentanwälten und Rechtsanwälten mbB
(86) International application number: PCT/JP2012/050341
(87) International publication number: WO 2012/120915

(56) References cited:
- EP-A1- 0 841 300
- EP-A1- 1 977 807
- WO-A1-2007/086339
- JP-A- 63 104 620
- JP-A- 63 252 509
- JP-A- 2002 520 226
- JP-A- 2007 061 717

## Description

### TECHNICAL FIELD

The present invention relates to a defoaming method and a defoaming apparatus suitable for breaking foam on the liquid surface, more particularly, for breaking foam generated when various containers such as metal cans, cups made of plastic, tray-like containers, PET bottles, bottle cans, or glass bottles are filled with the contents such as beverages.

### BACKGROUND ART

In a filling step of various packaged beverages (such as canned beverages, beverages in PET bottles, and bottled beverages), generally, the beverage is filled from above into a container disposed vertically in a filling machine, and then, the container is sealed by a lid or a cap by means of a sealing machine (such as a seamer or a capper). Then, as the important factor for keeping the beverage quality and improving the flavor, there is the reduction of the residual oxygen content in the sealed container. Particularly, it is important to remove oxygen from the headspace in the container. In order to implement this, a deoxidation technique by gas displacement such as undercover gassing immediately before sealing has been developed and used. On the other hand, packaged beverages are products to be consumed in large amounts. For this reason, a higher speed of the filling step has been pursued. In the case of canned beverages, high-speed lines for producing 1000 cans to 2000 cans per minute have been put into practical use. In filling of beverages in such high-speed lines, foam is generated inside the containers. The generation behavior of the foam and the disappearing behavior of the generated foam differ depending on the properties of individual beverages and filling conditions. However, in general, with an increase in production rate, a larger amount of foam is generated. In addition, a sufficient time cannot be taken until the foam disappears. Accordingly, sealing is performed with foam being left therein.

Further, the oxygen in the foam cannot be removed by gas displacement in the headspace, which hinders the reduction of the oxygen content in the headspace. In particular, at the present time when the deoxidation technology by gas displacement has been improved, the oxygen in the foam is the main factor of the residual oxygen content. Under present circumstances, a method of mixing a defoaming agent in the beverage formulation is adopted in order to suppress foam. However, the taste of the contents such as beverages may be affected. This entails a demand for an effective defoaming technology of causing disappearance of foam between filling and sealing.

Under such circumstances, as the solving means for this demand, there is proposed a defoaming technology of applying laser beam which is an external energy. For example, there is proposed the following defoaming technology: the intermolecular bonds forming the foam film, and the water molecules or organic molecules in the film are oscillated and excited with a laser beam, thereby cutting the intermolecular bonds for defoaming (Patent Document 1).

Further, the present applicant found that the pulsed sound waves generated by the shock of the laser-induced breakdown of pulsed laser beam exerts an excellent effect on defoaming, and proposed "a defoaming method in which foam is destroyed using pulsed sound waves for defoaming" (Patent Document 2).

Patent Document 1: Japanese patent Application Laid-open No. S63-252509
Patent Document 2: WO 2007-086339

However, with the defoaming technology in accordance with the conventional Patent Document 1, each foam is irradiated with an optical laser beam. For this reason, a long time is required for defoaming, so that defoaming cannot be performed at a high speed. Further, the foam in the vicinity of the inner circumferential surface of the container cannot also be broken effectively.

On the other hand, with the defoaming technology in accordance with the Patent Document 2, pulsed sound waves are generated by the shock of the laser-induced breakdown. Thus, the pulsed sound waves with a strong change in pressure propagate as spherical waves from a sound source, and destroy the foam for defoaming. Accordingly, the pulsed sound waves propagate as far as the inner circumferential surface of the container. Thus, the foam in the vicinity of the inner circumferential surface of the container difficult to break with a conventional method can also be effectively broken.

However, the shock on the liquid surface of a beverage or the like is large. Accordingly, droplets are dispersed to be deposited on an apparatus, or a condensing optical system such as a condensing lens, thereby causing contamination.

For this reason, in order to prevent a laser beam oscillation device, a condensing optical system such as a condensing lens, or the like from being contaminated by the vapor from the liquid surface, broken foam drops, or the like, the position thereof must be separated from the liquid surface. This results in the reduction of the laser beam condensing property. Accordingly, the defoaming property cannot be enhanced.

Thus, the defoaming technology of the Patent Document 2 proposed by the present applicant is a superior technology to the conventional defoaming technology of the Patent Document 1. However, the subsequent studies have created demands for the following further improvements: 1. an improvement of shortening the focal length and enhancing the condensing property of the laser beam required from the following reason. The pulsed laser beam is applied toward the liquid surface. Thus, in order to prevent the optical element such as a lens from being contaminated by the vapor from the liquid surface, broken foam drops, or the like, the focal length must be elongated; and 2. an improvement of enhancing the defoaming efficiency required from the following reason. The pulsed sound waves are generated in the free space, and propagate as spherical waves, and the pulsed sound waves are only partially involved in defoaming, resulting in the reduction of the defoaming efficiency.

### DISCLOSURE OF THE INVENTION

Therefore, the present invention solves the problems in the defoaming technologies. It is an object of the present invention to provide, in a defoaming technology using the pulsed sound waves generated by the shock of the laser-induced breakdown of pulsed laser beam, an apparatus for a defoaming method capable of enhancing the use efficiency at the time of defoaming of the pulsed sound waves, preventing the contamination of the condensing optical system and the like, and providing an effective defoaming effect, and a defoaming apparatus for embodying these.

The present inventors conducted a close study in order to solve the problems. As a result, they found the following fact: by directing the pulsed sound waves generated by the shock of laser-induced breakdown of pulsed laser beam toward the liquid surface direction using an acoustic waveguide, it is possible to solve the problems. This led to the present invention.

In accordance with a first aspect, there is provided a defoaming method for destroying foam on a liquid surface with a pulsed sound wave generated by pulsed laser beam, the method comprising: directing a reflected wave at an inner circumferential surface of an acoustic waveguide for the pulsed sound wave in a direction of an opening of the acoustic waveguide opposing the liquid surface, and reducing a difference in time between reflected waves travelling in different directions to reach the opening.

In accordance with a second aspect in addition to the configuration of the defoaming method in accordance with the first aspect, a traveling direction of the reflected wave is set at 40° or less with respect to an axial direction of the acoustic waveguide.

In accordance with a third aspect, there is provided a defoaming apparatus for destroying foam on a liquid surface with a pulsed sound wave generated by pulsed laser beam, the apparatus comprising: a pulsed laser beam oscillation device; a condensing optical system for condensing the pulsed laser beam oscillated by the pulsed laser beam oscillation device; and an acoustic waveguide disposed such that a focal point of the condensed laser beam is situated in an internal space, and such that an opening of the acoustic waveguide is opposed to the liquid surface, wherein the acoustic waveguide has a laser beam incident hole for allowing the pulsed laser beam to pass therethrough, and is formed such that an internal diameter of an inner circumferential surface increases from at least the focal point or the vicinity thereof toward the opening.

In accordance with a fourth aspect of the invention, in addition to the configuration of the defoaming apparatus in accordance with the third aspect, the inner circumferential surface of the acoustic waveguide has a tapered part toward the opening.

In accordance with a fifth aspect of the invention, in addition to the configuration of the defoaming apparatus in accordance with the fourth aspect, the tapered part comprises a one-stage tapered part, and is formed to have a taper angle of 25° to 60° with respect to an axial direction.

In accordance with a sixth aspect of the invention, in addition to the configuration of the defoaming apparatus in accordance with the fourth aspect, the tapered part includes a two-stage tapered part gradually decreasing in a taper angle thereof toward the opening, and is formed to have respective taper angles of 60° to 80°, and 30° to 50° with respect to an axial direction.

In accordance with a seventh aspect of the invention, in addition to the configuration of the defoaming apparatus in accordance with the fourth aspect, the tapered part includes a three-stage tapered part gradually decreasing in a taper angle thereof toward the opening, and is formed to have respective taper angles of 60° to 80°, 30° to 50°, and 10° to 20° with respect to an axial direction.

In accordance with eighth to eleventh aspects of the invention, in addition to each configuration of the defoaming apparatuses in accordance with the fourth to seventh aspects, each defoaming apparatus includes a straight part toward the opening under the tapered part. As a result, the problem is solved.

In accordance with a twelfth aspect in addition to the configuration of the defoaming apparatus in accordance with the third aspect, the defoaming apparatus includes a rear reflecting wall for reflecting, in a direction toward the opening, the pulsed sound waves traveling in respective directions toward an opposite side to the opening from the focal point of the condensed laser beam, with the rear reflecting wall being positioned further toward the opposite side to the opening than the focal point.

With the defoaming method in accordance with the first aspect, the energy of the pulsed sound wave in a conventional free space can be concentrated in the direction of the opening of the acoustic waveguide. This can reduce the reduction of the energy per time of the pulsed sound wave acing on the liquid surface of a beverage or the like.

Further, the number of reflections until the reflected wave of the pulsed sound wave reaches the liquid surface of the content solution such as a beverage is also reduced. For this reason, the attenuation of the energy due to the reflections is also reduced, resulting in a more improvement of the energy use efficiency. Thus, it is possible to effectively perform defoaming at a low laser output.

Further, accordingly, the laser beam oscillation device and the condensing optical system can be separated from the liquid surface, resulting in an increase in degree of freedom for arrangement thereof. Thus, it is possible to prevent the contamination of the laser beam oscillation device and the condensing optical system. In addition, it is possible to construct an efficient condensing optical system and the like.

With the configuration in accordance with the second aspect, the difference in time to reach the opening among the reflected waves of the pulsed sound waves in respective traveling directions can be reduced to a level capable of providing the same defoaming effects as in the case where the reflected waves have substantially simultaneously reached the opening. Further, the energy use efficiency is improved, so that defoaming can be effectively performed even at a low laser output.

With the defoaming apparatus in accordance with the third aspect, it is possible to implement a defoaming apparatus embodying the defoaming method in accordance with the first aspect, and producing the effects. Thus, the laser optical path and the traveling path for the pulsed sound wave can be separated from each other. This results in a further increase in degree of freedom for the arrangement of the laser optical oscillation device, the condensing optical system, and the like. Accordingly, it is possible to prevent the contamination, and it is possible to construct a more efficient condensing optical system and the like for defoaming.

With the configuration in accordance with the fourth aspect, the inner circumferential surface of the acoustic waveguide is formed in a simple shape. This enables the reflected wave at the inner circumferential surface of the acoustic waveguide of the pulsed sound wave to be directed in the direction of the opening. Further, the structure of the acoustic waveguide becomes simple, and is easy to manufacture, resulting in the reduction of the cost. In addition, the disposition in the facility also becomes easy, and the degree of freedom is also improved.

With the configuration in accordance with the fifth aspect, the reflected wave traveling direction of the pulsed sound wave can be set so as to be 40° or less with respect to the axial direction of the acoustic waveguide. For this reason, the difference in time to reach the opening among the reflected waves of the pulsed sound waves in respective traveling directions can be reduced to a level capable of providing the same defoaming effects as in the case where the reflected waves have substantially simultaneously reached the opening. Further, the energy use efficiency is improved, so that defoaming can be effectively performed even at a low laser output.

With the configuration in accordance with the sixth aspect, it becomes possible to further reduce the angle of the traveling direction of the reflected wave of the pulsed sound wave with respect to the axial direction of the acoustic waveguide. This can further reduce the difference in time to reach the opening among the reflected waves in respective traveling directions. Further, the energy use efficiency is improved, so that defoaming can be effectively performed even at a low laser output.

With the configuration in accordance with the seventh aspect, it becomes possible to further more reduce the angle of the traveling direction of the reflected wave of the pulsed sound wave with respect to the axial direction of the acoustic waveguide. This can further more reduce the difference in time to reach the opening among the reflected waves in respective traveling directions. Further, the energy use efficiency is more improved, so that defoaming can be effectively performed even at a lower laser output.

With each configuration in accordance with the eighth to eleventh aspects, by disposing the straight part, it is possible to make the area of the opening constant irrespective of the length of the acoustic waveguide, and to concentrate the reflected waves to the opening with a constant area. As a result, it becomes possible to freely set the distance between the focal point of the laser beam and the liquid surface. This further increases the degree of freedom for the arrangement of the laser beam oscillation device and the condensing optical system. Thus, the contamination can be prevented, and a more efficient condensing optical system can be constructed.

With the configuration in accordance with the twelfth aspect, the pulsed sound wave can be reflected in the direction of the opening to be used. Accordingly, further, the energy use efficiency is improved, so that defoaming can be effectively performed even at a low laser output.

### BRIEF DESCRIPTION OF THE DRAWINGS

FIG. 1 is a cross-sectional schematic view of a defoaming apparatus in accordance with an embodiment of the present invention;
FIG. 2 is a cross-sectional schematic view of a defoaming apparatus in accordance with another embodiment of the present invention;
FIG. 3 is a cross-sectional schematic view of a defoaming apparatus in accordance with a still another embodiment of the present invention;
FIG. 4 is a cross-sectional schematic view of a defoaming apparatus in accordance with a further embodiment;
FIG. 5 is a cross-sectional schematic view of a defoaming apparatus in accordance with a still further embodiment; and
FIG. 6 is a comparative experimental view of respective experiments of defoaming.

### EXPLANATION OF REFERENCE NUMERALS

100, 200 ... Defoaming apparatus
110, 210 ... Pulsed laser beam oscillation device
120, 220 ... Condensing optical system
121, 221 ... lens
122 ... Prism
223 ... Reflecting mirror
130, 230 ... Acoustic waveguide
131, 231 ... Opening
132, 232 ... Tapered part
133, 233 ... Straight part
134, 234 ... Laser beam incident hole
235 ... Rear reflecting wall
236 ... Laser beam passing hole
A ... Container
B ... Foam
C ... Contents
L ... Laser beam
S ... Focal point
P ... Pulsed sound wave

### BEST MODE FOR CARRYING OUT THE INVENTION

The defoaming method is a defoaming method for destroying foam on a liquid surface with a pulsed sound wave by pulsed laser beam. The method includes: directing a reflected wave at an inner circumferential surface of an acoustic waveguide of the pulsed sound wave in a direction of an opening of the acoustic waveguide opposed to the liquid surface, and reducing a difference in time to reach the opening among the reflected waves in respective traveling directions.

Further, the defoaming apparatus is an apparatus for embodying the defoaming method. The apparatus includes a pulsed laser beam oscillation device; a condensing optical system for condensing the pulsed laser beam oscillated by the pulsed laser beam oscillation device; and an acoustic waveguide disposed such that a focal point of the condensed laser beam is situated in the internal space, and such that an opening is opposed to the liquid surface. The acoustic waveguide has a laser beam incident hole for allowing the pulsed laser beam to pass therethrough, and is formed such that an inner diameter of an inner circumferential surface increases from at least the vicinity of the focal point toward the opening.

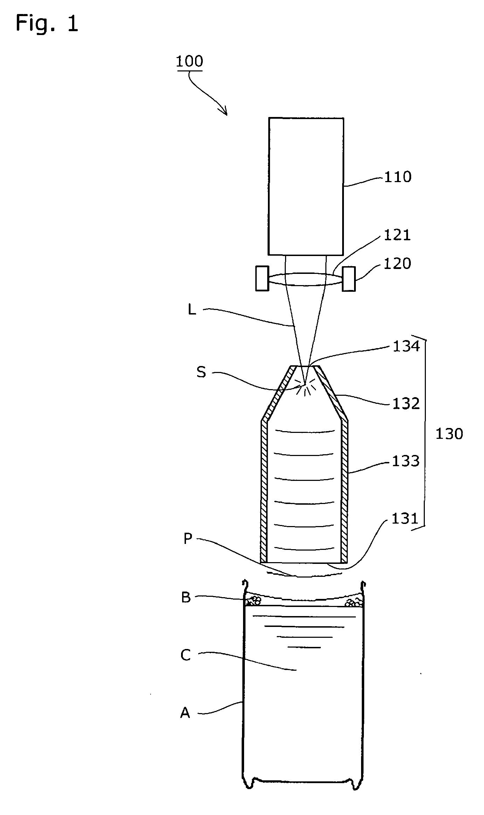

FIG. 1 schematically shows the defoaming principle in the basic form.

In the drawing, reference numeral 100 is a defoaming apparatus, and includes a pulsed laser beam oscillation device 110 for generating a pulsed beam L, a condensing optical system 120 for condensing on a focal point S the pulsed laser beam L oscillated from the pulsed laser beam oscillation device 110, and an acoustic waveguide 130. The defoaming apparatus 100 is disposed so that an opening 131 of the acoustic waveguide 130 faces vertically above the surface of a liquid such as a beverage to be defoamed.

In the embodiment shown in FIG. 1, in the sealing and filling line of the contents C into a container A, the acoustic waveguide 130 is disposed vertically above a conveyor for transporting the container A filled with the contents C to a sealing device, or above the container passing position before sealing in the sealing device. Thus, the pulsed laser beam oscillation device 110 and the condensing optical system 120 are disposed so that the pulsed laser beam L is applied from the axial direction of the acoustic waveguide 130.

The pulsed laser beam oscillation device 110 is preferably the one for oscillating pulsed laser beam which can emit the energy accumulated in the laser medium as a beam pulse at a time. As the pulsed lasers, mention may be made of a YAG laser, a YVO4 laser, and a YLF laser capable of Q switch oscillation, and a femtosecond laser such as a TiS laser. The pulsed lasers each have a repeating period of several Hz to several tens of kHz. The energy accumulated during the repeating period is emitted for a time interval as very short as several femtoseconds (fs) to several tens of nanoseconds (ns). Accordingly, a high peak power can be effectively obtained from a small input energy. As the pulsed laser beam oscillation devices, other than these, there can be used pulsed laser beam oscillation devices for oscillating various kinds of laser beam, such as CO₂ laser, an excimer laser, and a semiconductor laser. Alternatively, also usable is a harmonic beam generated by a wavelength conversion element from the base wave of these kinds of laser beam. The various kinds of pulsed laser beam also include a continuous wave (CW) oscillation pulsed laser beam. Also in this case, a pulsed beam can be generated using an optical control member such as a shutter.

As the condensing optical system 120 in the present embodiment, there is shown one condensing lens 121 disposed between the pulsed laser beam oscillation device 110 and the acoustic waveguide 130. However, the condensing optical system 120 is not necessarily limited thereto.

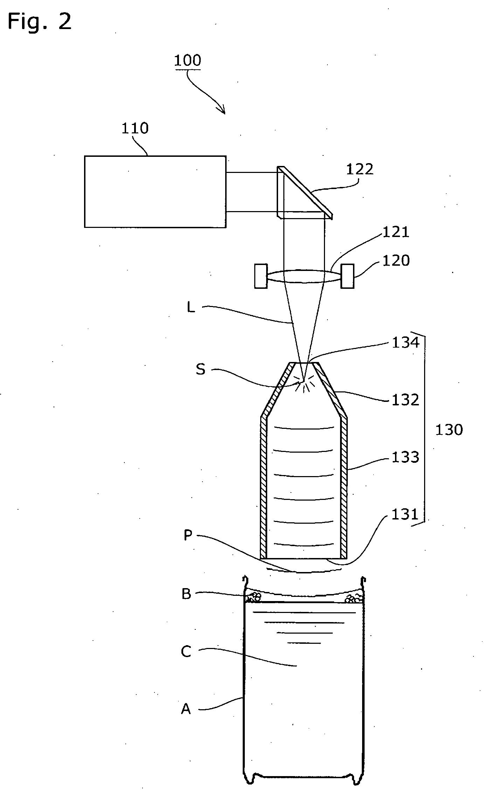

Alternatively, the condensing optical system 120 may be formed as a separate unit from the pulsed laser beam oscillation device 110. However, the condensing optical system 120 can also be disposed integrally with the pulsed laser beam oscillation device 110. Still alternatively, as shown in FIG. 2, the following configuration is also acceptable: for the condensing optical system 120, a prism 122, a reflecting mirror, or the like is disposed, thereby to bend and condense the pulsed laser beam L; as a result, the exposure direction of the pulsed laser beam oscillation device 110 is the direction other than the axial direction of the acoustic waveguide 130.

The acoustic waveguide 130 includes a tapered part 132 on the laser beam incident hole 134 side, and a straight part 133 on the opening 131 side. The tapered part 132 is formed in such a form that the inner diameter of the inner circumferential surface increases from at least the focal point S of the pulsed laser beam or its vicinity toward the opening 131. Then, the pulsed laser beam L condensed by the condensing optical system 120 is applied through the laser beam incident hole 134 into the inside so that the focal point S is situated in the internal space of the tapered part 132 of the acoustic waveguide 130.

At the focal point S, a pulsed sound wave P is generated by laser-induced breakdown. The intensity varies according to the optical power density per unit area at the focal point S. Therefore, by optimizing the condensing optical system 120, and enhancing the condensing property, it is possible to efficiently generate laser-induced breakdown from the same laser output. In general, a larger numerical aperture (NA) of the lens is advantageous for enhancing the condensing property. This means that a lens with a larger aperture and a shorter focal length has a higher condensing property. However, use of a lens with a shorter focal length which is good in condensing efficiency results in the narrower distance from the liquid surface. Accordingly, the condensing optical system is contaminated by dispersion of droplets or the like. Further, it is advantageous for enhancing the condensing property that the wave fronts are even. For this reason, it is preferable to use combined lenses corrected in aberration by a combination of a plurality of lenses (aplanatic lenses), an aspheric lens of which the shape of the lens surface is designed according to the state of the wave front, or the like.

The pulsed sound wave P generated by the shock of the laser-induced breakdown propagates as a spherical wave. For this reason, when the pulsed sound wave P is generated in the free space, the sound wave intensity per unit area sharply decreases in an inverse proportion to the square of the distance. For this reason, in the related art, the distance between the focal point S of the laser beam and the liquid surface cannot be increased.

In the present invention, the acoustic waveguide 130 is adopted. Thus, it is configured such that reflected waves from the inner circumferential surface of the acoustic waveguide 130 of the pulsed sound wave P are directed toward the opening 131 direction of the acoustic waveguide 130 opposed to the liquid surface, and such that there is reduced the difference in time to reach the opening 131 among the pulsed sound waves P of reflected waves in respective traveling directions.

Namely, the tapered part 132 of the acoustic waveguide 130 is disposed on the focal point S side of the laser beam. As a result, the pulsed sound wave P going toward the inner circumferential surface of the acoustic waveguide 130 is reflected so as to reduce the angle formed with the axial direction of the acoustic waveguide 130, and travels toward the opening 131 side. Thus, the reflected waves in respective traveling directions of the pulsed sound wave P travel toward the opening 131 while hardly causing a time difference therebetween. For this reason, the number of reflections until arrival of the reflected waves to the opening 131 is reduced. Thus, the attenuation of the energy due to reflection can also be reduced. Further, the pulsed sound waves P going toward the inner circumferential surface of the acoustic waveguide 130 partially become direct waves, and travel directly toward the opening 131 side of the acoustic waveguide 130. However, the difference in time is also reduced between the reflected waves and the direct waves.

For this reason, as compared with the case where the pulsed sound waves P are generated in the free space, the acoustic waveguide 130 enables the pulsed sound waves P to propagate over a relatively longer distance therethrough without decreasing the energy per unit area of the pulsed sound waves P. In addition, by reducing the difference in time to reach the opening 131 among the reflected waves in respective traveling directions, the reduction of the energy per time of the pulsed sound waves P acting on the liquid surface is also reduced. Then, it becomes possible to increase the distance between the focal point S of the laser beam and the liquid surface. Further, use of the acoustic waveguide 130 prevents the contamination. Accordingly, it becomes possible to enhance the condensing property using a lens with a short focal length which is good in condensing efficiency.

Theoretically, the inner circumferential surface shape is ideally configured such that other pulsed sound waves P than the direct waves directly reaching the opening 131 are reflected by the inner circumferential surface of the acoustic waveguide 130 only one time, and go in the direction of the opening 131.

However, substantially, even when the pulsed sound waves P are reflected by the inner circumferential surface of the acoustic waveguide 130 several times, it is possible to obtain sufficient effects approximately. To that end, the acoustic waveguide 130 is formed such that the inner diameter of the inner circumferential surface increases toward the opening 131 at least in the vicinity of the focal point P. This sufficiently produces effects. Specifically, as the shape easy to manufacture, and capable of providing effects with ease, the inner circumferential surface of the acoustic waveguide 130 may desirably have the tapered part 132 toward the opening 131.

Particularly, by setting the direction of travel of the reflected wave at 40° or less with respect to the axial direction of the acoustic waveguide 130, remarkable effects can be observed. To that end, desirably, the tapered part of the inner circumferential surface of the acoustic waveguide 130 includes a one-stage tapered part 132, and is formed with a taper angle of 25° to 60° with respect to the axial direction.

Then, the inner circumferential surface of the acoustic waveguide 130 is formed in a taper throughout overall length thereof. Then, with an increase in distance between the focal point P and the opening 131, the area of the opening 131 increases. For this reason, preferably, to the opening 131, the straight part 133 is disposed so as to concentrate the energy of the pulsed sound wave P only to the top surface of the container A.

Alternatively, in order to implement a shape close to a more ideal inner circumferential surface shape, desirably, the tapered part 132 includes a two-stage tapered part gradually decreasing in taper angle toward the opening of the acoustic waveguide 130, and is formed with respective taper angles of 60° to 80°, and 30° to 50°, respectively, with respect to the axial direction.

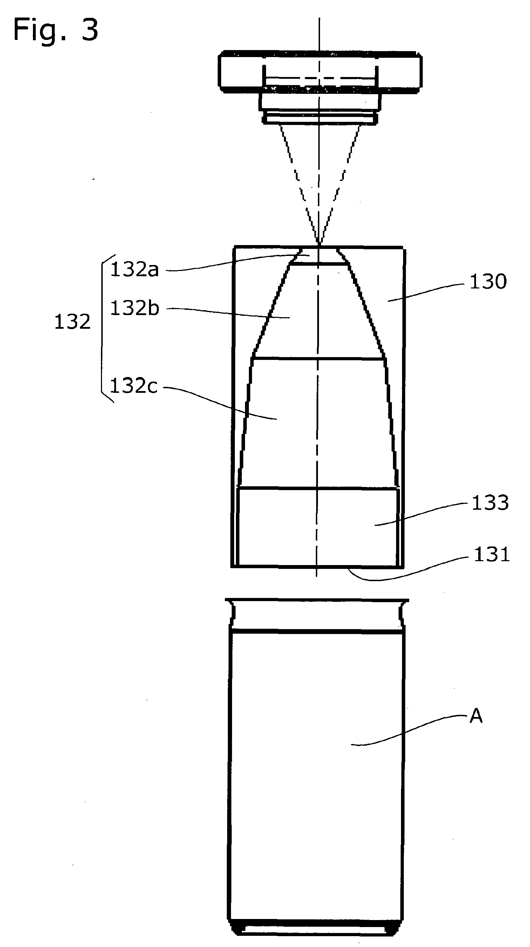

Further, in order to implement a shape further closer to the ideal inner circumferential surface shape, as shown in FIG. 3, still further desirably, the tapered part 132 includes three-stage tapered parts 132a, 132b, and 132c gradually decreasing in taper angle toward the opening 131 of the acoustic waveguide 130, and is formed with respective taper angles of 60° to 80°, 30° to 50°, and 10° to 20°, respectively, with respect to the axial direction.

### Other Embodiments

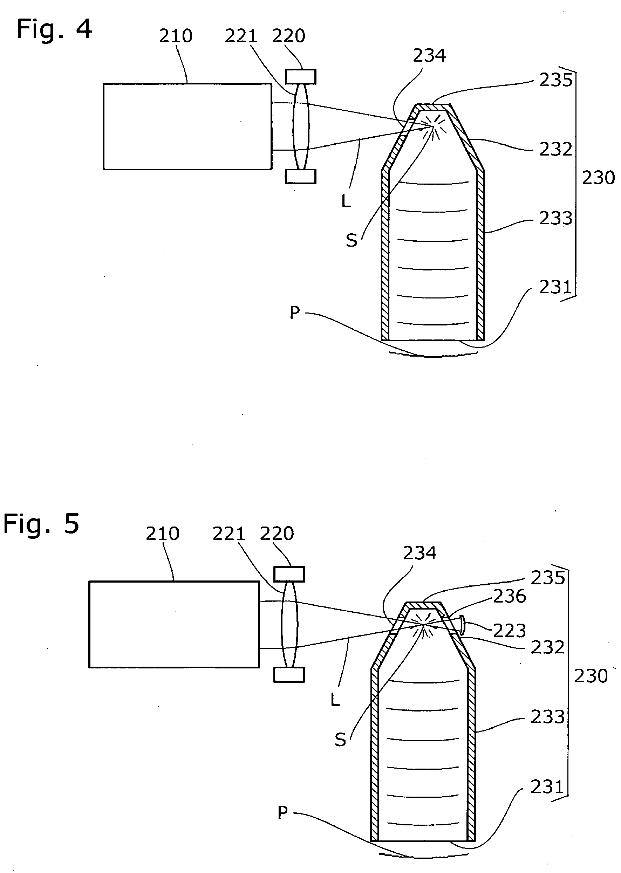

FIG. 4 shows a still another embodiment. In the present embodiment, a laser beam incident hole 234 is disposed on the lateral side of a tapered part 232 of an acoustic waveguide 230. A pulsed laser beam oscillation device 210 and a condensing optical system 220 are disposed on the lateral side thereof. Thus, it is configured such that pulsed laser beam L is applied from the lateral side, and is condensed to the focal point S.

Then, a rear reflecting wall 235 is disposed on an anti-opening side of the focal point S of the acoustic waveguide 230. As a result, the pulsed sound wave P traveling from the focal point S in the anti-opening direction is reflected in the direction of the opening 231 by the rear reflecting wall 235, thereby to be used as the energy for defoaming.

This results in a further improvement of the use efficiency of the energy, so that defoaming can be effectively performed at a low laser output. Further, the laser optical path and the path for the pulsed sound wave P can be separated from each other. Therefore, the condensing optical system 220 has less restrictions, and hence a condensing optical system with a high condensing efficiency can be constructed.

Further, as shown in FIG. 5, a laser beam passing hole 236 is disposed on the opposite lateral side of the laser beam incident hole 234, and a reflecting mirror 223 is disposed on the outside of the laser beam passing hole 236. As a result, the laser beam reflected by the reflecting mirror 223 also goes toward the focal point S. Accordingly, the energy density at the focal point S is improved. As a result, a large pulsed sound wave P can be generated with a small laser output.

Incidentally, when the reflecting mirror is disposed in the inside of the acoustic waveguide 230, the laser beam passing hole 236 is not required to be formed.

Alternatively, a gas inlet port may be disposed in the circumferential wall of the acoustic waveguide 230, thereby to introduce gases (e.g., inert gases such as a nitrogen gas and air) from the outside into the acoustic waveguide 230.

In this case, for example, when defoaming is performed immediately after filling the contents, the vapor generated from the filled content solution such as a beverage in the container can be prevented from entering and contaminating the acoustic waveguide. Thus, ozone generated by breakdown can be prevented from flowing out through the opening 231, and entering the inside of the container. Incidentally, when a gas inlet port is disposed, it is preferably situated between the focal point S of the laser beam and the opening 231.

Alternatively, the opening 231 of the acoustic waveguide may be formed in a horn shape in order to inhibit the propagation loss of the pulsed sound wave at the opening.

The length of the acoustic waveguide may be long or short, and has no particular restriction. Further, in the inside of the acoustic waveguide, the position of the focal point S is preferably set on the central axis of the acoustic waveguide in order to propagate the wave fronts of the pulsed sound waves P evenly to the opening.

Alternatively, when the rear reflecting wall 235 is disposed on the anti-opening side of the acoustic waveguide, the shape is not limited to the planar shape closing the extension part of the tapered part 232 shown in FIG. 5. The shape may be an appropriate shape in view of the direction of travel of the pulsed sound waves P in the inside of the acoustic waveguide.

### Experiments

### 1. Condensing conditions of laser beam

Laser oscillation device: YAG laser oscillation device (Brilliant B) (wavelength of laser beam: 1064 nm) manufactured by Quantel Co.

Condensing lens: condensing lens (NYTL-30-50PY1) manufactured by SIGMA KOKI CO., LTD.

### 2. Acoustic waveguide

### (1) Length

The length is 100 mm so that the focal point is achieved at the center of the laser beam incident hole.

### (2) Laser beam incident hole inner diameter, opening inner diameter

Experiment 1: laser beam incident hole inner diameter, opening inner diameter 40 mm.
Experiments 2 to 7: laser beam incident hole inner diameter 10 mm, opening inner diameter 40 mm.

### (3) Inner circumferential surface shape

Experiment 1: straight tube.
Experiment 2: taper tube including a tapered part having a taper angle from the laser beam incident hole of 150° (4 mm in height) formed therein.
Experiment 3: taper tube including a tapered part having a taper angle from the laser beam incident hole of 120° (8.7 mm in height) formed therein.
Experiment 4: taper tube including a tapered part having a taper angle from the laser beam incident hole of 90° (15 mm in height) formed therein.
Experiment 5: taper tube including a one-stage tapered part having a taper angle from the laser beam incident hole of 60° (26 mm in height) formed therein.
Experiment 6: taper tube including a two-stage tapered part having taper angles from the laser beam incident hole of 75° (5.2 mm in height) and 45° (32 mm in height) formed therein.
Experiment 7: taper tube including a three-stage tapered part having taper angles from the laser beam incident hole of 71° (4.4 mm in height), 42° (25 mm in height), and 13° (60 mm in height) formed therein.

Incidentally, the taper angle and the height of the tapered part are the angle and the height with respect to the axial direction of the acoustic waveguide. The remaining part toward the opening is the straight part.

### 3. Beverage can

Into a can with a content weight of 200 g, 190 g of 65°C coffee with milk was filled with foaming by a funnel. The can was set at a position apart from the opening of the acoustic waveguide by 10 mm.

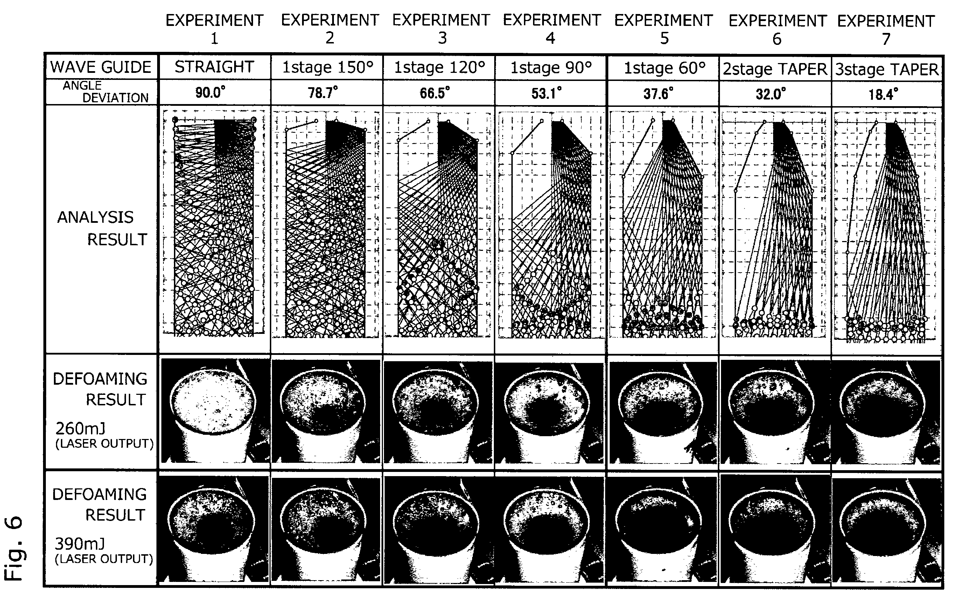

FIG. 6 shows the results of respective experiments.

### 4. Inner circumferential shape of acoustic waveguide

As for the inner circumferential shape of each acoustic waveguide in respective experiments 1 to 7, the outputs per pulse of the pulsed laser were set at 260 mJ and 390 mJ using power meters 30A-P-17 and VEGA manufactured by Ophir Optronics Solutions Ltd., respectively. The defoaming results upon generating one-time pulsed sound wave were photographically observed.

As a result, the defoaming effects were improved by the following facts: the tapered part increasing in inner diameter of the inner circumferential surface thereof from the laser beam focal point vicinity toward the opening of the acoustic waveguide includes a one-stage tapered part, and is formed with a taper angle of 60° (Experiment 5); whereas, the tapered part includes a two-stage tapered part gradually decreasing in taper angle toward the opening of the acoustic waveguide, and is formed with respective taper angles of 75° and 45° (Experiment 6) ; and further, the tapered part includes a three-stage tapered part gradually decreasing in taper angle toward the opening of the acoustic waveguide, and is formed with respective taper angles of 71°, 42°, and 13° (Experiment 7).

### 5. Propagation state of pulsed sound wave in acoustic waveguide

In the inner circumferential surface shape of each acoustic waveguide in the respective Experiments 1 to 7, the propagation state of a pulsed sound wave after a lapse of 294 micr'oseconds (µs) after generation of the pulsed sound wave was observed. As a result, it was found as follows: in Experiments 5 to 7 showing a remarkable rise of the defoaming effects, the reflected waves of the pulsed sound waves in respective directions traveling in the inner circumferential surface of the acoustic waveguide undergo a deviation in angle of 40° or less with respect to the axial direction of the acoustic waveguide.

Thus, by the deviation in angle of 40° or less, the reflected waves go in the direction of the opening of the acoustic waveguide. At the time point at which the direct waves directly going toward the opening arrive, the reflected waves also reach the vicinity of the opening. This results in a smaller difference in time taken to reach the opening between the reflected waves and the direct waves, resulting in a remarkable rise in defoaming effects.

Therefore, the results indicate as follows. It is important that the inner circumferential surface shape of the acoustic waveguide is formed in a shape causing the deviation in angle of 40° or less, specifically, formed in a shape increasing in inner diameter of the inner circumferential surface from the focal point of the laser beam, or the vicinity thereof toward the opening of the acoustic waveguide.

Then, the shape of the inner circumferential surface of the acoustic waveguide is formed into the shape of: the one-stage tapered part increasing in inner diameter toward the opening of the acoustic waveguide of the Experiment 5; particularly, the two-stage tapered part of the Experiment 6 gradually decreasing in taper angle toward the opening; or the three-stage taper part of the Experiment 7. As a result, the reflected waves at the inner circumferential surface of the acoustic waveguide of the pulsed sound waves are directed toward the opening direction, and the differences in time to reach the opening among the reflected waves in respective traveling directions are sequentially reduced.

For this reason, the shape of the inner circumferential surface of the acoustic waveguide is preferably formed in each of the tapered parts.

The specific means have no particular restriction, and various methods and apparatuses can be adopted so long as they can instantaneously destroy foam using pulsed sound waves generated in the acoustic waveguide.

The present invention is applicable to various containers such as metal cans, cups made of plastic, tray-like containers, PET bottles, bottle cans, and glass bottles. In general, the repeating period and the pulse width of pulsed laser beam are short. For this reason, even when the container is being transported, it can be handled as being standing still. For one container, pulsed sound waves may be generated only one time or may be generated a plurality of times at a given repeating period. Alternatively, a single luminous flux or a plurality of luminous fluxes may be applied. Further, it is also possible to generate a plurality of pulsed sound waves while scanning luminous fluxes using an optical element such as a galvano mirror.

### INDUSTRIAL APPLICABILITY

The defoaming apparatus of the present invention is preferable for breaking the foam generated upon filling the contents such as beverages into various containers. However, not limited to the case where the contents such as beverages are filled in the various containers, the defoaming apparatus of the present invention is usable for breaking of the foam generated in various food manufacturing steps and the like of, for example, a bean curd manufacturing step, and defoaming means in various industrial fields.

## Claims

1. A defoaming apparatus (100, 200) for destroying foam (B) on a liquid surface with a pulsed sound wave generated by pulsed laser beam,
the apparatus comprising:
a pulsed laser beam oscillation device (110, 210);
a condensing optical system (120,220) for condensing the pulsed laser beam oscillated by the pulsed laser beam oscillation device (110, 210); and
an acoustic waveguide (130, 230) disposed such that a focal point (S) of the condensed laser beam is situated in an internal space, and such that an opening (131, 231) of the acoustic waveguide (130, 230) is opposed to the liquid surface,
wherein the acoustic waveguide (130, 230) has a laser beam incident hole (134, 234) for allowing the pulsed laser beam to pass therethrough, has a tapered part (132, 232) formed such that an internal diameter of an inner circumferential surface increases from at least the focal point (S) or the vicinity thereof toward the opening (131, 231), and
has a straight part (133, 233) under the tapered part (132, 232).

2. The defoaming apparatus (100, 200) according to claim 1, wherein the tapered part (132, 232) comprises a one-stage tapered part, and is formed to have a taper angle of 25° to 60° with respect to an axial direction.

3. The defoaming apparatus (100, 200) according to claim 1, wherein the tapered part (132, 232) comprises a two-stage tapered part gradually decreasing in a taper angle thereof toward the opening (131, 231), and is formed to have respective taper angles of 60° to 80°, and 30° to 50° with respect to an axial direction.

4. The defoaming apparatus (100, 200) according to claim 1, wherein the tapered part (132, 232) comprises a three-stage tapered part gradually decreasing in a taper angle thereof toward the opening (131, 231), and is formed to have respective taper angles of 60° to 80°, 30° to 50°, and 10° to 20° with respect to an axial direction.

## Patentansprüche

1. Entschäumungsvorrichtung (100, 200) zum Zerstören von Schaum (B) auf einer Flüssigkeitsoberfläche mittels einer gepulsten Schallwelle, die durch einen gepulsten Laserstrahl erzeugt wird,
wobei die Vorrichtung aufweist:
eine Oszillationsvorrichtung (110, 210) für den gepulsten Laserstrahl;
ein konzentrierendes optisches System (120, 220) zum Konzentrieren des durch die Oszillationsvorrichtung (110, 210) für den gepulsten Laserstrahl in Oszillation versetzten gepulsten Laserstrahls; und
einen akustischen Wellenleiter (130, 230), der derart angeordnet ist, dass ein Brennpunkt (S) des konzentrierten Laserstrahls in einem Innenraum angeordnet ist, und dass eine Öffnung (131, 231) des akustischen Wellenleiters (130, 230) der Flüssigkeitsoberfläche gegenüberliegt,
wobei der akustische Wellenleiter (130, 230) aufweist: ein Laserstrahleinfallsloch (134, 234) für den Durchtritt des gepulsten Laserstrahls durch diesen, einen sich verjüngenden Bereich (132, 232), der derart ausgebildet ist, dass der Innendurchmesser einer Innenumfangsfläche von zumindest dem Brennpunkt (S) oder der Nähe desselben in Richtung der Öffnung 131, 231) zunimmt, und
einen geraden Bereich (133, 233) unter dem sich verjüngenden Bereich (132, 232) aufweist.

2. Entschäumungsvorrichtung (100, 200) nach Anspruch 1, bei welcher der sich verjüngende Bereich (132, 232) einen einstufigen, sich verjüngenden Bereich aufweist und mit einem Kegelwinkel von 25° bis 60° in Bezug auf die axiale Richtung ausgebildet ist.

3. Entschäumungsvorrichtung (100, 200) nach Anspruch 1, bei welcher der sich verjüngende Bereich (132, 232) einen zweistufigen, sich verjüngenden Bereich aufweist, dessen Kegelwinkel sich in Richtung der Öffnung (131, 231) allmählich verringert, und der Bereich mit jeweiligen Kegelwinkeln von 60° bis 80° und 30° bis 50° in Bezug auf die axiale Richtung ausgebildet ist.

4. Entschäumungsvorrichtung (100, 200) nach Anspruch 1, bei welcher der sich verjüngende Bereich (132, 232) einen dreistufigen, sich verjüngenden Bereich aufweist, dessen Kegelwinkel sich in Richtung der Öffnung (131, 231) allmählich verringert, und der Bereich mit jeweiligen Kegelwinkeln von 60° bis 80°, 30° bis 50° und 10° bis 20° in Bezug auf die axiale Richtung ausgebildet ist.

## Revendications

1. Dispositif anti-mousse (100, 200) destiné à détruire la mousse (B) sur une surface liquide avec une onde sonore pulsée générée par un faisceau laser impulsionnel,
le dispositif comprenant :
un dispositif d'oscillation de faisceau laser impulsionnel (110, 210) ;
un système optique de concentration (120, 220) pour concentrer le faisceau laser impulsionnel mis en oscillation par le dispositif d'oscillation de faisceau laser impulsionnel (110, 210) ; et
un guide d'ondes acoustiques (130, 230) disposé de façon telle que le point focal (S) du faisceau laser concentré soit situé dans un espace interne, et de façon telle qu'une ouverture (131, 231) du guide d'ondes acoustiques (130, 230) soit opposée à la surface liquide,
dans lequel le guide d'ondes acoustiques (130, 230) comporte une ouverture pour le faisceau laser incident (134, 234) afin de permettre au faisceau laser impulsionnel de passer à travers elle, possède une partie conique (132, 232) formée de telle sorte qu'un diamètre interne de la surface périphérique intérieure soit croissant depuis au moins le point focal (S), ou depuis sa proximité, en direction de l'ouverture (131, 231), et
présente une partie rectiligne (133, 233) sous la partie conique (132, 232).

2. Dispositif anti-mousse (100, 200) selon la revendication 1, dans lequel la partie conique (132, 232) comprend une partie conique à un seul étage et est formée en vue de présenter un angle de conicité de 25° à 60° par rapport à une direction axiale.

3. Dispositif anti-mousse (100, 200) selon la revendication 1, dans lequel la partie conique (132, 232) comprend une partie conique à deux étages décroissant progressivement au niveau de l'angle de conicité en allant vers l'ouverture (131, 231), et est formée de façon à présenter des angles de conicité respectifs de 60° à 80°, et de 30° à 50° par rapport à une direction axiale.

4. Dispositif anti-mousse (100, 200) selon la revendication 1, dans lequel la partie conique (132, 232) comprend une partie conique (132, 232) à trois étages décroissant progressivement au niveau de l'angle de conicité en allant vers l'ouverture (131, 231), et est formée de façon à présenter des angles de conicité respectifs de 60° à 80°, de 30° à 50° et de 10° à 20° par rapport à une direction axiale.
